# EUROPÄISCHE PATENTSCHRIFT

(11) **EP 2 697 489 B1**
(45) Veröffentlichungstag und Bekanntmachung des Hinweises auf die Patenterteilung: **02.08.2017**
(21) Anmeldenummer: 12706032.5
(22) Anmeldetag: 24.02.2012
(51) Int. Cl.: F01N 3/30, F01N 3/36, F01N 9/00

(54) **VORRICHTUNG UND VERFAHREN ZUR ERWÄRMUNG VON ABGASEN EINER BRENNKRAFTMASCHINE**
DEVICE AND METHOD FOR HEATING EXHAUST GASES OF AN INTERNAL COMBUSTION ENGINE
DISPOSITIF ET PROCÉDÉ DE CHAUFFAGE DES GAZ D'ÉCHAPPEMENT D'UN MOTEUR À COMBUSTION INTERNE

(30) Priorität: 15.04.2011 DE 102011007461
(43) Veröffentlichungstag der Anmeldung: 19.02.2014
(73) Patentinhaber: Robert Bosch GmbH, 70442 Stuttgart (DE)
(72) Erfinder: HEILIG, Dirk, 74360 Ilsfeld (DE); BRESSLER, Harald, 70825 Korntal-Muenchingen (DE); DAMSON, Bjoern, 70199 Stuttgart (DE)
(86) Internationale Anmeldenummer: PCT/EP2012/053153
(87) Internationale Veröffentlichungsnummer: WO 2012/139801

(56) Entgegenhaltungen:
- EP-A1- 1 939 419
- EP-A1- 2 253 813
- EP-A2- 2 020 487
- DE-A1- 1 594 710
- JP-A- 60 022 015
- US-A- 3 203 168
- US-B1- 7 032 376

## Beschreibung

### Stand der Technik

Die Erfindung betrifft eine Vorrichtung sowie ein Verfahren zur Erwärmung von Abgasen einer Brennkraftmaschine gemäß dem Oberbegriff der unabhängigen Ansprüche.

Im Zuge der immer schärferen Schadstoffgrenzwerte für Abgase von Brennkraftmaschinen sind zahlreiche Systeme zur Abgasnachbehandlung entwickelt worden. Wird eine Brennkraftmaschine nach längerer Stillstandszeit neu gestartet und haben sich die Komponenten der Brennkraftmaschine sowie des Abgaskanals auf Umgebungstemperatur abgekühlt, benötigen die Systeme zur Abgasnachbehandlung während der sogenannten Kaltstartphase zunächst eine gewisse Zeit, bevor sie ihre Betriebstemperatur erreicht haben und entsprechende Reinigungswirkung in Bezug auf die im Abgas enthaltenen Schadstoffkomponenten erzielen. Die Aufheizung des Abgaskanals erfolgt dabei in der Regel durch das Abgas der Brennkraftmaschine, es sind jedoch auch Vorrichtungen bekannt, um die Kaltstartphase zu verkürzen und die Abgastemperatur in dieser Phase anzuheben. Aus der DE 10 2006 060 471 ist eine Abgasanlage für eine Brennkraftmaschine bekannt, in der stromauf einer Abgasnachbehandlungseinrichtung ein Brenner zur Erhöhung der Abgastemperatur angeordnet ist, wobei der Brenner eine Brennstoffversorgung sowie eine Brennkammer mit einer Voroxidationszone und einer Nachoxidationszone aufweist. Die Voroxidationszone besitzt dabei eine Einleitstelle für Primärluft, die Nachoxidationszone eine Versorgung mit Sekundärluft.

Das Dokument US 3,203,168 A beschreibt eine Vorrichtung zur Erwärmung von Abgasen einer Brennkraftmaschine, mit einer Brennkammer sowie einer Pumpe zur Zufuhr eines die Verbrennung fördernden Gases in die Brennkammer. Zudem sind zwei voneinander beabstandete Einleitstellen vorgesehen, welche Mittel aufweisen, die in Abhängigkeit von der Menge des zugeführten Brennstoffs ein Verhältnis zwischen einem ersten und einem zweiten Massenstrom einstellen. Die Offenlegungsschrift EP 2 253 813 A1 betrifft eine weitere Vorrichtung zur Erwärmung von Abgasen einer Brennkraftmaschine. Die Vorrichtung weist eine Brennkammer und eine Luftversorgungseinrichtung zur Zufuhr eines die Verbrennung fördernden Gases auf. Das Gas wird durch zwei Einleitstellen beziehungsweise zwei separate Leitungen in die Brennkammer eingeführt. Zusätzlich sind ein erstes und ein zweites Luftdosierelement vorgesehen, welche das Verhältnis zwischen einem ersten Massenstrom und einem zweiten Massenstrom des die Verbrennung fördernden Gases einstellen.

### Offenbarung

Die erfindungsgemäße Vorrichtung und das erfindungsgemäße Verfahren zur Erwärmung von Abgasen einer Brennkraftmaschine mit den Merkmalen der unabhängigen Ansprüche haben demgegenüber den Vorteil, dass Mittel vorgesehen sind, die in Abhängigkeit von der Menge des zugeführten Brennstoffs das Verhältnis zwischen einem ersten Massenstrom m₁ des die Verbrennung fördernden Gases und einem zweiten Massenstrom m₂ des die Verbrennung fördernden Gases eine Aufteilung der Massenströme m₁, m₂ über die beiden Einleitstellen in die Brennkammer einstellen. Dadurch ist es möglich, bei jedem Lastzustand des Brenners die Menge des zugeführten die Verbrennung fördernden Gases auf die Brennerleistung abzustimmen. Durch die in den Unteransprüchen aufgeführten Maßnahmen sind vorteilhafte Weiterbildungen und Verbesserungen der angegeben Vorrichtung bzw. des angegebenen Verfahrens möglich.

Eine vorteilhafte Weiterbildung besteht darin, dass die Brennkammer einen ersten Bereich aufweist, in dem die Brennstoffzufuhr sowie eine erste Einleitstelle für des die Verbrennung fördernde Gas münden, und einen zweiten Bereich, in den eine zweite Einleitstelle für das die Verbrennung fördernde Gas mündet. Dadurch kann der Brennstoff in dem ersten Bereich der Brennkammer durch das die Verbrennung fördernde Gas unter Wärmeabgabe voroxidiert werden und in dem zweiten Bereich der Brennkammer, ebenfalls unter Wärmeabgabe vollständig umgesetzt werden. Dabei ist es besonders vorteilhaft, wenn der erste Bereich der Brennkammer von dem zweiten Bereich durch eine gasdurchlässige Struktur getrennt ist. Eine solche gasdurchlässige Struktur kann ein Eindringen von flüssigem Brennstoff in den zweiten Bereich der Brennkammer hemmen, so dass eine saubere Trennung von Voroxidationszone und Nachverbrennung erreicht wird, und kein flüssiger Brennstoff aus der Brennstoffzufuhr in den Abgaskanal der Brennkraftmaschine gelangt. Erfindungsgemäß, fasst die Versorgungseinrichtung eine Pumpe um. Durch eine Pumpe kann eine gleichmäßige Versorgung mit dem die Verbrennung fördernden Gas gewährleistet werden. Erfindungsgemäß ist die Pumpe über zwei separate Leitungen mit den zwei voneinander beabstandeten Einleitstellen an der Brennkammer verbunden. Dadurch kann ein erster Massenstrom m₁ von der Pumpe über eine erste Leitung zu der ersten Einleitstelle und ein zweiter Massenstrom m₂ von der Pumpe über eine zweite Leitung zu der zweiten Einleitstelle an der Brennkammer geführt werden.

Dabei sind der Pumpe oder den zwei separaten Leitungen zwischen der Pumpe und den Einleitstellen die Mittel zur Aufteilung des ersten Massenstroms m₁ und der zweiten Massenstroms m₂ des die Verbrennung fördernden Gases zugeordnet. Über eine solche Zuordnung lässt sich eine bedarfsgerechte Aufteilung der beiden Masseströme m₁ und m₂ zu den jeweiligen Einleitstellen der Brennkammer darstellen.

Erfindungsgemäß ist vorgesehen, dass Ermittlungsmittel vorhanden sind, welche die Brennstoffzufuhr zur Brennkammer ermitteln, wobei die Mittel zur Aufteilung der beiden Massenströme die beiden Massenströme m₁ und m₂ des die Verbrennung fördernden Gases in Abhängigkeit der durch die Ermittlungsmittel festgestellten Zufuhr des Brennstoffs aufteilen. Über solche Ermittlungsmittel lässt sich leicht der zu der jeweiligen Brennerleistung gehörende Bedarf an dem die Verbrennung fördernden Gas ermitteln, so dass die Aufteilung bedarfsgerecht gesteuert werden kann. Erfindungsgemäß ist vorgesehen, dass eine Leistung der Pumpe in Abhängigkeit der durch die Ermittlungsmittel festgestellten Zufuhr des Brennstoffs gesteuert oder geregelt wird. Die bedarfsgerechte Regelung der Pumpe zur Bereitstellung des die Verbrennung fördernden Gases lässt sich dabei einfach über die zugeführte Brennstoffmenge steuern.

Dabei ist es besonders vorteilhaft, dass die Mittel zur Aufteilung des Massenströme m₁, m₂ eine derartige Aufteilung der beiden Massenströme m₁, m₂ durchführen, dass mit steigender Zufuhr des Brennstoffs eine Zufuhr des die Verbrennung fördernden Gases zum zweiten Bereich der Brennkammer überproportional zur Zufuhr des die Verbrennung fördernden Gases zum ersten Bereich der Brennkammer ansteigt. Dadurch wird bei niedrigen Brennerleistungen mehr von dem die Verbrennung fördernden Gas in den ersten Bereich der Brennkammer geleitet, wobei es zu einer stärkeren Voroxidation kommt und bei höheren Brennerleistungen mehr von dem die Verbrennung fördernden Gas in den zweiten Bereich der Brennkammer geleitet, wodurch es zu einer stärkeren Nachoxidation und einer stärkeren Wärmefreisetzung in diesem zweiten Bereich der Brennkammer kommt.

Eine weitere vorteilhafte Weiterbildung besteht darin, dass die Mittel zur Aufteilung der Massenströme m₁, m₂ zumindest in einer der beiden separaten Leitungen Mittel zur Beeinflussung des Strömungswiderstandes umfassen. Über die Veränderung des Strömungswiderstandes in den beiden Leitungen lässt sich die Aufteilung der beiden Massenströme m₁, m₂ in Abhängigkeit der Leistung der Pumpe beeinflussen, ohne dass zusätzliche bewegliche Bauteile benötigt werden.

Dabei ist es insbesondere vorteilhaft, dass die Mittel zur Beeinflussung des Strömungswiderstandes in einer Leitung eine laminare Strömung und in der anderen Leitung eine turbulente Strömung ausbilden. Bei einer laminaren Strömung steigt der Strömungswiderstand mit der Strömungsgeschwindigkeit proportional an, während bei einer turbulenten Strömung der Strömungswiderstand quadratisch mit der Strömungsgeschwindigkeit steigt. Dadurch verschiebt sich die Aufteilung des Gesamtmassenstroms m_{g} in die beiden Massenströme m₁, m₂ zugunsten der Leitung, in der die laminare Strömung ausgebildet ist.

Dabei ist es insbesondere vorteilhaft, wenn die Mittel zur Beeinflussung des Strömungswiderstandes aus Wellblech, Metallgewebe und/oder Metallgestrick gebildet sind. Leitbleche oder Turbulenz erzeugende Elemente aus Wellblech, Metallgewebe und/oder Metallgestrick sind für die in der Nähe des Abgasstrangs herrschenden Umweltbedingungen bzgl. Temperatur und Korrosionswiderstand gut geeignet und lassen sich preisgünstig in die Leitungen integrieren.

Eine weitere vorteilhafte Weiterbildung besteht darin, dass in den zwei separaten Leitungen verstellbare Drosseln zur Einstellung des Verhältnisses zwischen dem ersten Massenstrom m₁ und dem zweiten Massenstrom m₂ des die Verbrennung fördernden Gases angeordnet sind. Über entsprechende verstellbare Drosseln kann der Querschnitt bzw. der Strömungswiderstand in den einzelnen Leitungen und damit verbunden der Durchfluss durch die jeweilige Leitung verstellt werden. Somit sind auch Drosseln ein einfaches und geeignetes Mittel zur bedarfsgerechten Aufteilung der beiden Massenströme m₁, m₂ zu den beiden Einleitstellen der Brennkammer.

### Zeichnungen

Ausführungsbeispiele der Erfindung sind in den Zeichnungen dargestellt und in der nachfolgenden Beschreibung näher erläutert
In Fig. 1 ist ein erstes Ausführungsbeispiel einer erfindungsgemäßen Vorrichtung zur Erwärmung von Abgasen einer Brennkraftmaschine gezeigt.
In Fig. 2 ist ein weiteres Ausführungsbeispiel einer erfindungsgemäßen Vorrichtung zur Erwärmung von Abgasen einer Brennkraftmaschine gezeigt.
In Fig. 3a ist ein Schnitt durch eine Leitung der erfindungsgemäßen Vorrichtung gezeigt.
In Fig. 3b ist ein weiterer Schnitt durch eine Leitung der erfindungsgemäßen Vorrichtung gezeigt.
In Fig. 4 ist ein Aufteilung eines Gesamtmassenstroms eines die Verbrennung fördenden Gases in zwei Teilmassenströme in Abhängigkeit von der Brennerleistung dargestellt.

Die erfindungsgemäße Vorrichtung umfasst eine Brennkammer 10, welche durch eine gasdurchlässige Struktur 18 in einen ersten Bereich 12 und einen zweiten Bereich 14 unterteilt ist. Der zweite Bereich 14 der Brennkammer mündet in einen Abgaskanal 60 einer Brennkraftmaschine. Eine Versorgungseinheit 30 ist über eine erste Leitung 34 mit einer ersten Einleitstelle 13 in dem ersten Bereich 12 der Brennkammer 10 verbunden. Die Versorgungseinheit 30 ist zusätzlich über eine zweite Leitung 36 mit einer zweiten Einleitstelle 15, welche am zweiten Bereich 14 der Brennkammer 10 ausgebildet ist, verbunden. Am ersten Bereich 12 der Brennkammer 10 ist zentrisch eine Brennstoffzufuhr 20 angeordnet, mit der ein Brennstoff 22 in die Brennkammer 10 eingeleitet werden kann. An dem ersten Bereich 12 der Brennkammer 10 ist eine Zündvorrichtung 16 angeordnet, über welche ein Gemisch aus dem Brennstoff 22 und einem, über die Einleitstelle 13 zugeführten, die Verbrennung fördernden Gas 32 gezündet werden kann.

Im Betrieb der Vorrichtung wird der Brennstoff 22 durch die Brennstoffzufuhr 20 in den ersten Bereich 12 der Brennkammer 10 eingeleitet. Parallel dazu wird ein die Verbrennung förderndes Gas 32, beispielsweise Luft oder Sauerstoff, durch die Versorgungseinrichtung 30 über die Leitung 34 dem ersten Bereich 12 der Brennkammer 10 zugeführt, wo sich der Brennstoff 22 und das die Verbrennung fördernde Gas 32 vermischen und über die Zündvorrichtung 16 entflammt werden. Das entflammte Gasgemisch strömt unter Wärmeabgabe durch die gasdurchlässige Struktur 18, wobei dem Gasgemisch im zweiten Bereich 14 der Brennkammer durch die Versorgungseinrichtung 30 und die zweite Leitung 36 über die zweite Einleitstelle 15 nochmals das die Verbrennung fördernde Gas 32 zugeführt wird. In dem zweiten Bereich 14 der Brennkammer 10 wird das Gasgemisch aus dem Brennstoff 22 und dem die Verbrennung fördernden Gas 32 nochmals unter Freisetzung von Wärme oxidiert, wobei Verbrennungsprodukte des Gasgemischs in den Abgaskanal 60 der Brennkraftmaschine eingeleitet werden und dort eine in Strömungsrichtung folgende Abgasnachbehandlungseinrichtung, beispielsweise einen Oxidationskatalysator oder einen Partikelfilter, erwärmen.

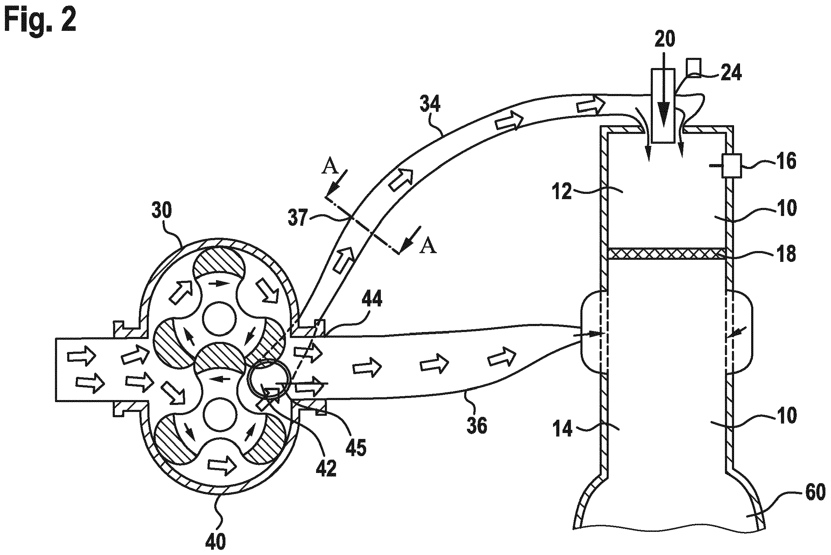

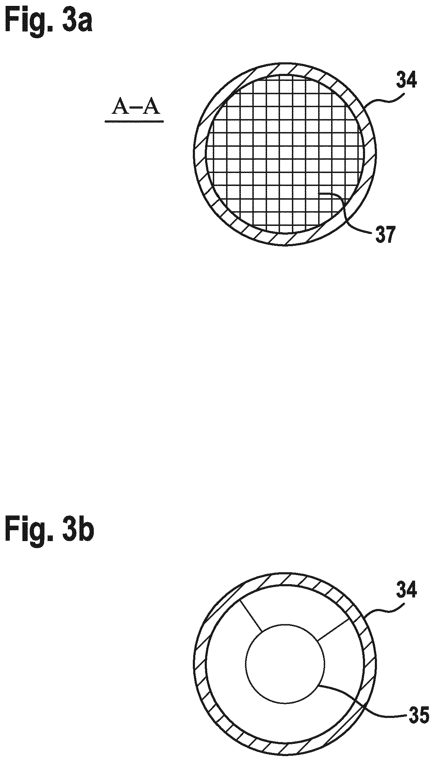

In Fig. 2 ist ein alternatives Ausführungsbeispiels einer erfindungsgemäßen Vorrichtung zu Erwärmung von Abgasen einer Brennkraftmaschine dargestellt. Die Vorrichtung weist als Versorgungseinrichtung 30 eine Pumpe 40 auf, an welcher ein erster Auslass 42 und ein zweiter Auslass 44 ausgebildet sind. Der erste Auslass der Pumpe 40 ist über die erste Leitung 34 mit der ersten Einleitstelle 13 an dem ersten Bereich 10 der Brennkammer 10 verbunden, wobei in der ersten Leitung 34 Mittel 37 zur Beeinflussung des Strömungswiderstandes in der ersten Leitung 34 angeordnet. Die zweite Leitung 36 verbindet den zweiten Auslass 44 der Pumpe 40 mit der zweiten Einleitstelle 15 an dem zweiten Bereich 14 der Brennkammer 10, wobei der erste Bereich 12 und der zweite Bereich 14 durch eine gasdurchlässige Struktur 18, beispielsweise ein Metallgeflecht, getrennt sind, welche ein Eindringen von flüssigem Brennstoff 22 in den zweiten Bereich 14 der Brennkammer hindert. An dem ersten Bereich 12 der Brennkammer 10 ist zentrisch die Brennstoffversorgung 20 angeordnet, welche einen, bevorzugt flüssigen, Brennstoff 22 in den ersten Bereich 12 der Brennkammer 10 leitet. Die erste Einleitstelle 13 umgibt die Brennstoffzufuhr 20 ringförmig, wodurch eine möglichst gleichmäßig Verteilung des über die erste Einleitstelle 13 in den ersten Bereich 12 der Brennkammer 10 zugeführten, die Verbrennung fördernden Gases 32 erreicht wird. Ferner ist an dem ersten Bereich 12 der Brennkammer die Zündvorrichtung 16 angeordnet, welche den Brennstoff 22 bzw. ein Gemisch aus dem Brennstoff und dem die Verbrennung fördernden Gas 32 zündet. An der Brennstoffzufuhr sind Ermittlungsmittel 24 zur Erfassung der zugeführten Menge des Brennstoffs 22 in die Brennkammer 10, beispielsweise ein Durchflussmessgerät, angeordnet. An der Pumpe 40 sind Mittel 45 vorgesehen, die einen Gesamtmassenstrom m_{g} des die Verbrennung fördernden Gases 32 in Abhängigkeit der Menge des zugeführten Brennstoffs 22 in einen ersten Massenstrom m₁ des die Verbrennung fördernden Gases 32 durch die erste Leitung 34 und einen zweiten Massenstrom m₂ des die Verbrennung fördernden Gases 32 durch die zweite Leitung 36 aufteilen. Im einfachsten Ausführungsbeispiel erfolgt die Aufteilung des Gesamtmassenstroms m_{g} in die beiden Massenströme m₁ und m₂ ohne zusätzliche, mechanisch verstellbaren Elemente allein über den Strömungswiderstand in den beiden Leitungen 34 und 36, wobei in der ersten Leitung 34 eine laminare Strömung mit proportional zu Strömungsgeschwindigkeit steigendem Strömungswiderstand ausgebildet ist, während in der zweiten Leitung 36 eine turbulente Strömung mit quadratisch zur Strömungsgeschwindigkeit steigendem Strömungswiderstand ausgebildet ist. Dies kann zum einen durch eine entsprechende Wahl von Rauhigkeit und Leitungsquerschnitt in den Leitungen 34, 36 erreicht werden, zusätzlich können aber auch Mittel 37 zur Beeinflussung des Strömungswiderstandes wie Turbulenzelemente oder Leitschaufeln in den Leitungen angeordnet sein. Ein Beispiel für ein solches Mittel 37 in der ersten Leitung 34 ist in Fig. 3a dargestellt. Als Material für solche Mittel 37 eignet sich aufgrund der Anfordungen bezüglich Korrosions- und Temperaturfestigkeit beispielsweise Wellblech, Metallgewebe und/oder Metallgestrick.

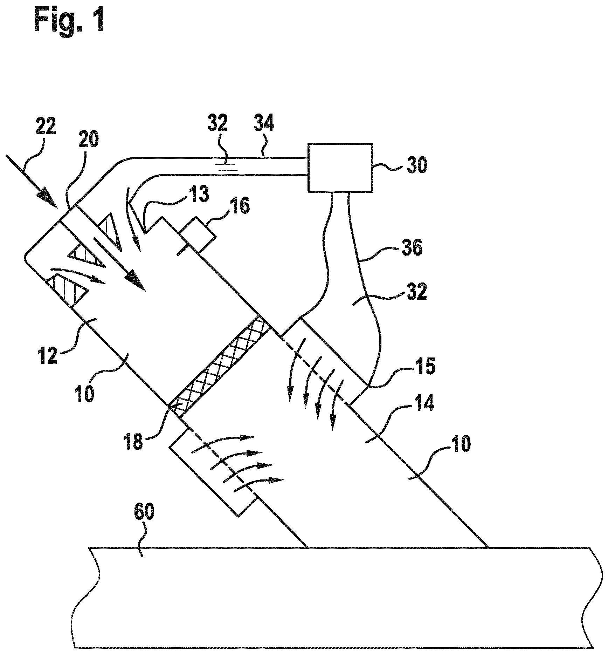

Durch die unterschiedlich stark steigenden Strömungswiderstände in den Leitungen 34, 36 verändert sich das Verhältnis des zugeführten, die Verbrennung fördernden Gases 32 in Abhängigkeit von der Fördermenge, bzw. Drehzahl der Pumpe 40. Dabei wird die Drehzahl bzw. Fördermenge der Pumpe 40 in Abhängigkeit der durch die Ermittlungsmittel 24 ermittelten Zufuhr des Brennstoffs 22 gesteuert oder geregelt. Die Vermischung des Brennstoffs 22 und des die Verbrennung fördernden Gases 32 erfolgt gemäß den Ausführungen zu Fig. 1.

Alternativ kann sowohl die Brennstoffzufuhr 20 als auch die erste Einleitstelle 13 exzentrisch angeordnet sein, bzw. kann die erste Einleitstelle 13 auch an anderer Stelle des ersten Bereichs 12 der Brennkammer 10 angeordnet sein. Alternativ bzw. zusätzlich können auch in der zweiten Leitung 36 Mittel 37 zur Beeinflussung des Strömungswiderstandes angeordnet sein.

Alternativ können anstelle einer Pumpe 40 auch zwei Pumpen eingesetzt werden, wobei dann jeweils eine Pumpe über eine Leitung 34, 36 mit jeweils einer Einleitstelle 13, 15 an der Brennkammer 10 verbunden ist. Ferner ist es möglich, dass die Mittel 45, die in Abhängigkeit von der Menge des zugeführten Brennstoffs 22 das Verhältnis zwischen dem ersten Massenstrom m₁ und dem zweiten Massenstrom m₂ einstellen einen Aktuator, beispielsweise einen Schieberegler, umfassen, welcher die Luftverteilung von der Pumpe 40 zu den beiden Leitungen 34, 36 steuert. Alternativ kann die Pumpe 40 auch über eine Leitung 34 mit der Brennkammer 10 verbunden sein, wobei die Aufteilung der beiden Massenströme m₁ und m₂ auf die beiden Einleitstellen 13, 15 erst an der Brennkammer erfolgt.

Die Pumpe 40 ist bevorzugt als Klauenpumpe ausgebildet, alternativ kann die Pumpe jedoch auch als Kreiselpumpe oder Kolbenpumpe ausgebildet sein. Die Verwendung einer Klauen-Pumpe, beispielsweise eines sogenannten "Roots-Gebläses", bietet den Vorteil, dass bei niedrigen Drehzahlen, d.h. niedriger Fördermenge der Pumpe, die Strömung des die Verbrennung fördernden Gases 32 gleichmäßig auf die beiden Auslässe 42, 44 verteilt, während mit steigender Pumpendrehzahl die Fliehkräfte zunehmen, wodurch sich die Verteilung des die Verbrennung fördernden Gases in Richtung des Auslasses 44 bzw. der zweiten Leitung 36 verschiebt.

Alternativ können die Mittel 45, die in Abhängigkeit von der Menge des zugeführten Brennstoffs 22 das Verhältnis zwischen dem ersten Massenstrom m₁ und dem zweiten Massenstrom m₂ einstellen, wie in Fig. 3b dargestellt verstellbare Blenden 35 in den Leitungen 34, 36 umfassen, mit denen das Verhältnis der zugeführten Menge des die Verbrennung fördernden Gases 32 zu den Einleitstellen 13, 15 verstellt werden kann.

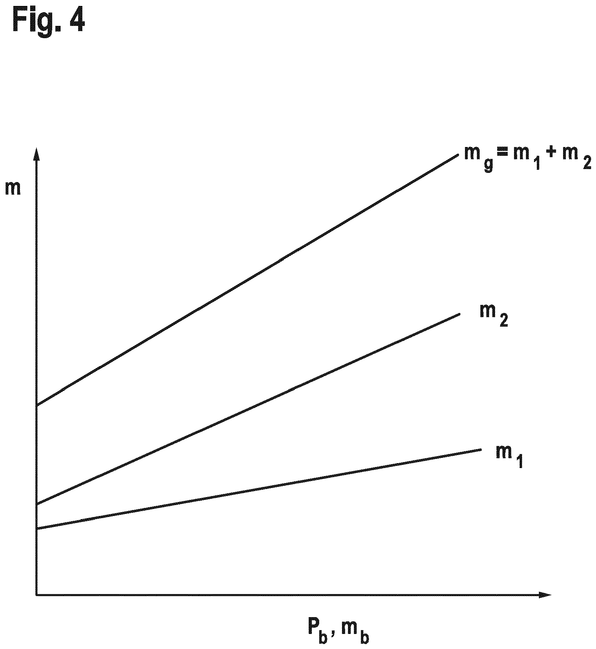

In Fig. 4 ist die Aufteilung des Gesamtmassenstroms mg des die Verbrennung fördernden Gases 32 in Abhängigkeit von der Brennerleistung P_{b}, bzw. der Brennstoffzufuhr m_{b} dargestellt. Mit steigender Brennstoffzufuhr verschiebt sich das Verhältnis von dem ersten Massenstrom m₁ zum zweiten Massenstrom m₂ in Richtung des zweiten Massenstroms m₂. Bei höherer Brennstoffzufuhr steigt also die Menge des an der zweiten Einleitstelle 15 eingeleiteten die Verbrennung fördernden Gases 32 überproportional zu der Menge des an der ersten Einleitstelle eingeleiteten Gases an. Während bei niedriger Brennerleistung etwa 40% des die Verbrennung fördernden Gases 32 an der ersten Einleitstelle 13 und etwa 60% an der zweiten Einleitstelle 15 zugeführt werden, verschiebt sich das Verhältnis mit steigender Brennstoffzufuhr in etwa zu 20% an der ersten Einleitstelle 13 und 80% an der zweiten Einleistelle 15, wobei die Menge des die Verbrennung fördernden Gases 32 an beiden Einleitstellen 13, 15 mit zunehmender Zufuhr des Brennstoffs 22 ansteigt.

## Patentansprüche

1. Vorrichtung zur Erwärmung von Abgasen einer Brennkraftmaschine, mit einer Brennkammer (10), einer Brennstoffversorgung (20) zur Zufuhr eines, vorzugsweise flüssigen, Brennstoffs (22), sowie einer Versorgungseinrichtung (30) zur Zufuhr eines die Verbrennung fördernden Gases (32) in die Brennkammer (10) über zwei voneinander beabstandete Einleitstellen (13, 15), wobei Mittel (45) vorgesehen sind, die in Abhängigkeit von der Menge des zugeführten Brennstoffs (22) das Verhältnis zwischen einem ersten Massenstrom m₁ des die Verbrennung fördernden Gases (32) und einem zweiten Massenstrom m₂ des die Verbrennung fördernden Gases (32) eine Aufteilung der Massenströme m₁, m₂ über die beiden Einleitstellen (13, 15) in die Brennkammer (10) einstellen, wobei die Versorgungseinrichtung (30) eine Pumpe (40) umfasst, und wobei die Pumpe (40) über zwei separate Leitungen (34, 36) mit den zwei voneinander beabstandeten Einleitstellen (13, 15) verbunden ist, wobei der Pumpe (40) oder den zwei separaten Leitungen (34 , 36) zwischen der Pumpe (40) und den Einleitstellen (13, 15) die Mittel (45) zur Aufteilung des ersten Massenstroms m1 und des zweiten Massenstroms m2 des die Verbrennung fördernden Gases (32) zugeordnet sind, **dadurch gekennzeichnet, dass** an der Brennstoffversorgung (20) Ermittlungsmittel (24) angeordnet sind, welche die Brennstoffzufuhr zur Brennkammer (10) ermitteln, wobei die Mittel ( 45) zur Aufteilung des ersten Massenstroms m1 und des zweiten Massenstroms m2 die beiden Massenströme m1, m2 in Abhängigkeit der durch die Ermittlungsmittel (24) festgestellte Zufuhr des Brennstoff (22) aufteilen, und wobei eine Leistung der Pumpe (40) in Abhängigkeit der durch die Ermittlungsmittel (24) festgestellte Zufuhr des Brennstoffs (22) gesteuert oder geregelt wird.

2. Vorrichtung nach Anspruch 1, **dadurch gekennzeichnet, dass** die Brennkammer (10) einen ersten Bereich (12) aufweist, in dem die Brennstoffzufuhr (20) sowie eine erste Einleitstelle (13) für das die Verbrennung fördernde Gas (32) münden, und einen zweiten Bereich (14), in den eine zweite Einleitstelle (15) für das die Verbrennung fördernde Gas (32) mündet.

3. Vorrichtung nach Anspruch 2, **dadurch gekennzeichnet, dass** der erste Bereich (12) der Brennkammer (10) von dem zweiten Bereich (14) durch eine gasdurchlässige Struktur (18) getrennt ist.

4. Vorrichtung nach einem der vorhergehenden Ansprüche, dass die Mittel zur Aufteilung eine derartige Aufteilung der Massenströme m1, m2 durchführen, dass mit steigender Zufuhr des Brennstoffs (22) eine Zufuhr des die Verbrennung fördernden Gases (32) zum zweiten Bereich (14) der Brennkammer (10) überproportional zur Zufuhr des die Verbrennung fördernden Gases (32) zum ersten Bereich (12) der Brennkammer (10) ansteigt.

5. Vorrichtung nach einem der vorhergehenden Ansprüche, **dadurch gekennzeichnet, dass** die Mittel (45) zur Aufteilung der Massenströme m1, m2 zumindest in einer der zwei separaten Leitungen (34, 36) Mittel (37) zur Beeinflussung des Strömungswiderstandes umfassen.

6. Vorrichtung nach Anspruch 5, **dadurch gekennzeichnet, dass** die Mittel (37) zur Beeinflussung des Strömungswiderstandes eine laminare Strömung bilden.

7. Vorrichtung nach Anspruch 5, **dadurch gekennzeichnet, dass** die Mittel (37) zur Beeinflussung des Strömungswiderstandes eine turbulente Strömung bilden.

8. Vorrichtung nach Anspruch 6 oder 7, **dadurch gekennzeichnet, dass** die Mittel (37) zur Beeinflussung des Strömungswiderstandes aus Wellblech, Metallgewebe und/oder Metallgestrick gebildet sind.

9. Vorrichtung nach einem der vorhergehenden Ansprüche, **dadurch gekennzeichnet, dass** an oder in den zwei separaten Leitungen (34 , 36) verstellbare Drosseln (35) zur Einstellung des Verhältnisses zwischen dem ersten Massenstrom m1 und dem zweiten Massenstrom m2 des die Verbrennung fördernden Gases (32) angeordnet sind.

10. Abgasanlage mit einer Vorrichtung nach einem der Ansprüche 1 bis 9.

11. Verfahren zur Erwärmung von Abgasen einer Brennkraftmaschine, wobei ein, vorzugsweise flüssiger, Brennstoff (22) durch eine Brennstoffversorgung ( 20) einer Brennkammer (10) zugeführt wird und wobei der Brennkammer (10) durch eine Versorgungseinrichtung (30) über zwei voneinander beabstandeten Einleitstellen (13, 15) ein die Verbrennung förderndes Gas (32) zugeführt wird, wobei in Abhängigkeit von der Menge des zugeführten Brennstoffs (22) das Verhältnis zwischen einem ersten Massenstrom m₁ des die Verbrennung fördernden Gases (32) und einem zweiten Massenstrom m₂ des die Verbrennung fördernden Gases (32) zu den zwei voneinander beabstandeten Einleitstellen (13, 15) eingestellt wird, wobei eine Pumpe (40) der Versorgungseinrichtung (30) über zwei separate Leitungen (34 , 36) mit den zwei voneinander beabstandeten Einleitstellen (13, 15) verbunden wird, wobei der Pumpe (40) oder den zwei separaten Leitungen (34, 36) zwischen der Pumpe (40) und den Einleitstellen (13 , 15) Mittel (45) zur Aufteilung des ersten Massenstroms m₁ und des zweiten Massenstroms m₂ des die Verbrennung fördernden Gases (32) zugeordnet werden, **dadurch gekennzeichnet, dass** eine Brennstoffzufuhr in die Brennkammer (10) erfasst wird, wobei die beiden Massenströme m₁, m₂ in Abhängigkeit der festgestellten Zufuhr des Brennstoffs (22) aufgeteilt werden, und wobei eine Leistung der Pumpe (40) in Abhängigkeit der festgestellten Zufuhr des Brennstoffs (22) gesteuert oder geregelt wird.

## Claims

1. Device for heating exhaust gases of an internal combustion engine, having a combustion chamber (10), having a fuel supply (20) for the feed of a preferably liquid fuel (22), and having a supply device (30) for the feed of a combustion-promoting gas (32) into the combustion chamber (10) via two mutually spaced-apart introduction points (13, 15), wherein means (45) are provided which, in a manner dependent on the fed quantity of fuel (22), adjust the ratio between a first mass flow m₁ of the combustion-promoting gas (32) and a second mass flow m₂ of the combustion-promoting gas (32) a distribution of the mass flows m₁, m₂ via the two introduction points (13, 15) into the combustion chamber (10), wherein the supply device (30) comprises a pump (40), and wherein the pump (40) is connected via two separate lines (34, 36) to the two mutually spaced-apart introduction points (13, 15), wherein the pump (40) or the two separate lines (34, 36) between the pump (40) and the introduction points (13, 15) are assigned the means (45) for the distribution of the first mass flow m1 and the second mass flow m2 of the combustion-promoting gas (32), **characterized in that**, at the fuel supply (20), there are arranged determination means (24) which determine the fuel feed to the combustion chamber (10), wherein the means (45) for the distribution of the first mass flow m1 and the second mass flow m2 distribute the two mass flows m1, m2 in a manner dependent on the feed of the fuel (22) detected by the determination means (24), and wherein a power of the pump (40) is controlled or regulated in a manner dependent on the feed of the fuel (22) detected by the determination means (24).

2. Device according to Claim 1, **characterized in that** the combustion chamber (10) has a first region (12), in which the fuel feed (20) and a first introduction point (13) for the combustion-promoting gas (32) open out, and a second region (14), in which a second introduction point (15) for the combustion-promoting gas (32) opens out.

3. Device according to Claim 2, **characterized in that** the first region (12) of the combustion chamber (10) is separated from the second region (14) by a gas-permeable structure (18).

4. Device according to one of the preceding claims, that the means for distribution distribute the mass flows m1, m2 such that, with an increasing feed of the fuel (22), a feed of the combustion-promoting gas (32) to the second region (14) of the combustion chamber (10) increases disproportionately more than the feed of the combustion-promoting gas (32) to the first region (12) of the combustion chamber (10).

5. Device according to one of the preceding claims, **characterized in that** the means (45) for the distribution of the mass flows m1, m2 comprise, in one of the two separate lines (34, 36), means (37) for influencing the flow resistance.

6. Device according to Claim 5, **characterized in that** the means (37) for influencing the flow resistance form a laminar flow.

7. Device according to Claim 5, **characterized in that** the means (37) for influencing the flow resistance form a turbulent flow.

8. Device according to Claim 6 or 7, **characterized in that** the means (37) for influencing the flow resistance are formed from corrugated sheet metal, a metal fabric and/or a metal knit.

9. Device according to one of the preceding claims, **characterized in that** adjustable throttles (35) for adjustment of the ratio between the first mass flow m1 and the second mass flow m2 of the combustion-promoting gas (32) are arranged on or in the two separate lines (34, 36).

10. Exhaust system having a device according to one of Claims 1 to 9.

11. Method for heating exhaust gases of an internal combustion engine, wherein a preferably liquid fuel (22) is fed by means of a fuel supply (20) to a combustion chamber (10), and wherein the combustion chamber (10) is fed with a combustion-promoting gas (32) by means of a supply device (30) via two mutually spaced-apart introduction points (13, 15), wherein, in a manner dependent on the fed quantity of fuel (22), the ratio between a first mass flow m₁ of the combustion-promoting gas (32) and a second mass flow m₂ of the combustion-promoting gas (32) to the two mutually spaced-apart introduction points (13, 15) is adjusted, wherein a pump (40) of the supply device (30) is connected via two separate lines (34, 36) to the two mutually spaced-apart introduction points (13, 15), wherein the pump (40) or the two separate lines (34, 36) between the pump (40) and the introduction points (13, 15) are assigned means (45) for the distribution of the first mass flow m₁ and the second mass flow m₂ of the combustion-promoting gas (32), **characterized in that** a fuel feed into the combustion chamber (10) is detected, wherein the two mass flows m₁, m₂ are distributed in a manner dependent on the detected feed of the fuel (22), and wherein a power of the pump (40) is controlled or regulated in a manner dependent on the detected feed of the fuel (22).

## Revendications

1. Dispositif de chauffage de gaz d'échappement d'un moteur à combustion interne, comprenant une chambre de combustion (10), une alimentation en combustible (20) pour l'alimentation en un combustible (22) de préférence liquide, ainsi qu'un dispositif d'alimentation (30) pour l'alimentation en un gaz (32) favorisant la combustion dans la chambre de combustion (10) par le biais de deux zones d'introduction (13, 15) espacées l'une de l'autre, des moyens (45) étant prévus, lesquels, en fonction de la quantité de combustible acheminée (22), ajustent le rapport entre un premier débit massique m₁ du gaz (32) favorisant la combustion et un deuxième débit massique m₂ du gaz (32) favorisant la combustion une division des débits massiques m₁, m₂ par le biais des deux zones d'introduction (13, 15) dans la chambre de combustion (10), le dispositif d'alimentation (30) comprenant une pompe (40), et la pompe (40) étant connectée par le biais de deux conduites séparées (34, 36) aux deux zones d'introduction (13, 15) espacées l'une de l'autre, les moyens (45) pour diviser le premier débit massique m1 et le deuxième débit massique m₂ du gaz (32) favorisant la combustion étant associés à la pompe (40) ou aux deux conduites séparées (34, 36) entre la pompe (40) et les zones d'introduction (13, 15), **caractérisé en ce que** des moyens de détermination (24) sont disposés sur l'alimentation en combustible (20), lesquels déterminent l'alimentation en combustible à la chambre de combustion (10), les moyens (45) pour diviser le premier débit massique m₁ et le deuxième débit massique m₂ divisant les deux débits massiques m₁, m₂ en fonction de l'alimentation en combustible (22) établie par les moyens de détection (24), et une puissance de la pompe (40) étant commandée ou régulée en fonction de l'alimentation en combustible (22) établie par les moyens de détermination (24).

2. Dispositif selon la revendication 1, **caractérisé en ce que** la chambre de combustion (10) présente une première région (12) dans laquelle débouche l'alimentation en combustible (20) ainsi qu'une première zone d'introduction (13) pour le gaz (32) favorisant la combustion, et une deuxième région (14) dans laquelle débouche une deuxième zone d'introduction (15) pour le gaz (32) favorisant la combustion.

3. Dispositif selon la revendication 2, **caractérisé en ce que** la première région (12) de la chambre de combustion (10) est séparée de la deuxième région (14) par une structure perméable aux gaz (18).

4. Dispositif selon l'une quelconque des revendications précédentes, que les moyens pour diviser effectuent une division des débits massiques m₁, m₂ telle qu'avec une augmentation de l'alimentation en combustible (22), une alimentation en gaz (32) favorisant la combustion à la deuxième région (14) de la chambre de combustion (10) augmente de manière sur-proportionnelle par rapport à l'alimentation en gaz (32) favorisant la combustion à la première région (12) de la chambre de combustion (10).

5. Dispositif selon l'une quelconque des revendications précédentes, **caractérisé en ce que** les moyens (45) pour diviser les débits massiques m₁, m₂ comprennent des moyens (37) pour influencer la résistance à l'écoulement au moins dans l'une des deux conduites séparées (34, 36).

6. Dispositif selon la revendication 5, **caractérisé en ce que** les moyens (37) pour influencer la résistance à l'écoulement forment un écoulement laminaire.

7. Dispositif selon la revendication 5, **caractérisé en ce que** les moyens (37) pour influencer la résistance à l'écoulement forment un écoulement turbulent.

8. Dispositif selon la revendication 6 ou 7, **caractérisé en ce que** les moyens (37) pour influencer la résistance à l'écoulement sont formés de tôles ondulées, de treillis métallique et/ou de tricot métallique.

9. Dispositif selon l'une quelconque des revendications précédentes, **caractérisé en ce que** des étranglements réglables (35) pour ajuster le rapport entre le premier débit massique m₁ et le deuxième débit massique m₂ du gaz (32) favorisant la combustion sont disposés sur ou dans les deux conduites séparées (34, 36).

10. Installation de gaz d'échappement comprenant un dispositif selon l'une quelconque des revendications 1 à 9.

11. Procédé pour chauffer des gaz d'échappement d'un moteur à combustion interne, un combustible (22), de préférence liquide, étant acheminé à une chambre de combustion (10) par une alimentation en combustible (20) et un gaz favorisant la combustion (32) étant acheminé à la chambre de combustion (10) par un dispositif d'alimentation (30) par le biais de deux zones d'introduction (13, 15) espacées l'une de l'autre, le rapport entre un premier débit massique m₁ du gaz (32) favorisant la combustion et un deuxième débit massique m₂ du gaz (32) favorisant la combustion aux deux zones d'introduction (13, 15) espacées l'une de l'autre étant ajusté en fonction de la quantité de combustible acheminée (22), une pompe (40) du dispositif d'alimentation (30) étant connectée par le biais de deux conduites séparées (34, 36) aux deux zones d'introduction (13, 15) espacées l'une de l'autre, des moyens (45) pour diviser le premier débit massique m₁ et le deuxième débit massique m₂ du gaz (32) favorisant la combustion étant associés à la pompe (40) ou aux deux conduites séparées (34, 36) entre la pompe (40) et les zones d'introduction (13, 15), **caractérisé en ce qu'**une alimentation en combustible dans la chambre de combustion (10) est détectée, les deux débits massiques m₁, m₂ étant divisés en fonction de l'alimentation en combustible (22) établie, et une puissance de la pompe (40) étant commandée ou régulée en fonction de l'alimentation en combustible (22) établie.
